# EUROPEAN PATENT APPLICATION

(11) **EP 4 703 594 A1**
(43) Date of publication of application: **04.03.2026**
(21) Application number: 25151583.9
(22) Date of filing: 13.01.2025
(51) Int. Cl.: F15B 13/04, F15B 13/042, F15B 13/08

(54) **REVERSING VALVE GROUP AND PUMPING HYDRAULIC SYSTEM**

(30) Priority: 29.08.2024 CN 202411196908
(71) Applicant: Zoomlion Heavy Industry Science and Technology Co., Ltd., Changsha, Hunan 410013 (CN); Changde Zoomlion Hydraulic Limited Company, Changde, Hunan 415001 (CN)
(72) Inventor: Yang, Peng, Changde, Hunan, 415001 (CN); Zhang, Zebin, Changde, Hunan, 415001 (CN); Li, Jun, Changde, Hunan, 415001 (CN); Guo, Kun, Changde, Hunan, 415001 (CN); Zhou, Qidi, Changde, Hunan, 415001 (CN)
(74) Representative: Petraz, Gilberto Luigi

(57) **Abstract**

The present application belongs to the field of pumping, and discloses a reversing valve group and a pumping hydraulic system. The reversing valve group comprises a reversing valve and an unloading valve that are arranged in an integrated form, wherein the reversing valve is a slide valve and a reversing valve stem is used for controlling the unloading valve to switch to an unloading closed state at an end stroke position of the valve stem and to switch to an unloading open state at a midpoint stroke position of the valve stem. In the reversing valve group and the pumping hydraulic system of the present application, the unloading valve is integrated in the reversing valve to form the reversing valve group, and the opening or closing of the unloading valve is controlled by means of the stroke of the reversing valve stem, so as to avoid pressure impacts in the reversing process.

## Description

### FIELD

The present application belongs to the field of pumping, in particular to a pumping hydraulic system and a reversing valve group used by the pumping hydraulic system.

### BACKGROUND

In common pumping hydraulic systems, the reversing valve that controls a pumping oil cylinder group usually has an M-type neutral function, i.e., all working oil ports are closed, while a P port is communication with a T port, thus realizing neutral unloading. Alternatively, when a reversing valve with an O-type neutral function is used, an additional electromagnetic unloading valve is provided for unloading, because all valve ports are closed in the neutral position. However, in the former reversing valve, the high-pressure oil at the P port may be suddenly released to the T port during the unloading, resulting in high-pressure impacts during oil return switching and damage to the heat dissipation components. In the latter reversing valve, it is possible that the reversing valve stem has not been reversed to a correct position when the unloading valve is closed; at that point, the P port in the closed state may produce pressure impacts, which may lead to engine speed drop or stalling.

### SUMMARY

In view of the abovementioned defects or drawbacks in the prior art, the present application discloses a reversing valve group and a pumping hydraulic system, so as to avoid pressure impacts in the reversing process.

In order to attain the above object, the present application discloses a reversing valve group, which comprises a reversing valve and an unloading valve that are arranged in an integrated form, wherein the reversing valve is a slide valve and a reversing valve stem is used for controlling the unloading valve to switch to an unloading closed state at an end stroke position of the valve stem and to switch to an unloading open state at a midpoint stroke position of the valve stem.

In some embodiments, the reversing valve comprises:
a reversing valve body, which is provided therein with a reversing valve stem cavity arranged in an axial direction, and an oil supply cavity, an oil return cavity and a working oil cavity that extend to the reversing valve stem cavity; and
the reversing valve stem, which is arranged in the reversing valve stem cavity in a sliding fit manner, and provided therein with a flow passage;
wherein the unloading valve is mounted on a valve wall of the reversing valve body, and a hydraulic control cavity of the unloading valve extends to the reversing valve stem cavity through a flow passage inside the valve wall; at the end stroke position of the valve stem, the flow passage inside the valve wall is in communication with the flow passage inside the valve stem and the oil supply cavity; and at the midpoint stroke position of the valve stem, the flow passage inside the valve wall can be in communication with the oil return cavity.

In some embodiments, the reversing valve stem comprises:
a diversion slot for controlling the working oil cavity to be selectively in communication with the oil supply cavity or the oil return cavity; and
a position slot for controlling the flow passage inside the valve wall to be in communication with the oil return cavity at the midpoint stroke position of the valve stem.

In some embodiments, the reversing valve is a three-position four-way valve with an O-type neutral function.

In some embodiments, both the cross-sectional area of the flow passage inside the valve stem and the cross-sectional area of the flow passage inside the valve wall are not greater than 1/5 of the minimum cross-sectional area of the oil supply cavity or the oil return cavity.

In some embodiments, on the reversing valve body, the unloading valve is arranged at the center and distributed in the radial direction, the oil supply cavity extends to a valve port end of the reversing valve body, the working oil cavity comprises a first working oil cavity and a second working oil cavity that are arranged at two axial sides of the oil supply cavity, and the oil return cavity is located at a first axial side of the oil supply cavity and arranged at an outer side of the first working oil cavity apart from the working oil cavity in the axial direction; and
wherein the oil return cavity is in communication with the valve port end of the reversing valve body through an internal oil return flow passage, and the internal oil return flow passage extends to a second axial side of the oil supply cavity and is arranged at an outer side of the second working oil cavity apart from the second working oil cavity in the axial direction.

In some embodiments, the flow passage inside the valve stem comprises a first flow passage inside the valve stem and a second flow passage inside the valve stem, which are arranged at two axial ends of the reversing valve stem; the flow passage inside the valve wall comprises a first flow passage inside the valve wall and a second flow passage inside the valve wall, which extend from the hydraulic control cavity toward two sides in the axial direction;
wherein, an axial outer end of the first flow passage inside the valve stem is used for communicating with the first flow passage inside the valve wall, and an axial inner end of the first flow passage inside the valve stem is used for communicating with the first working oil cavity; and an axial outer end of the second flow passage inside the valve stem is used for communicating with the second flow passage inside the valve wall, and an axial inner end of the second flow passage inside the valve stem is used for communicating with the second working oil cavity.

In some embodiments, the reversing valve group comprises:
an overflow valve, which is integrated on the valve wall of the reversing valve body and has a valve port part arranged between the internal oil return flow passage and the oil supply cavity.

In some embodiments, the unloading valve is a cartridge valve.

The present application further discloses a pumping hydraulic system, which comprises a pumping oil cylinder group and the abovementioned reversing valve group, wherein the reversing valve is used for controlling the pumping oil cylinder group.

In the reversing valve group and the pumping hydraulic system of the present application, the unloading valve is integrated in the reversing valve to form the reversing valve group, and the opening or closing of the unloading valve is controlled by means of the stroke of the reversing valve stem, so as to avoid pressure impacts. In the process that the reversing valve stem moves to the midpoint stroke position of the valve stem, the oil in the hydraulic control cavity of the unloading valve gradually returns, so that the unloading valve is gradually switched to an unloading open state; at that point, the unloading valve will be slowly opened by the high-pressure oil at the P port, and the high-pressure oil at the P port will be gradually unloaded at a high flow rate through the unloading valve, thereby the high-pressure oil at the P port will not be suddenly released to the T port and result in high pressure impacts during oil return switching and damage to heat dissipation components. In the process that the reversing valve stem moves to the end stroke position of the valve stem, the high-pressure oil at the P port can be at least partially unloaded via the unloading valve; thus, the pumped high-pressure oil can be at least partially unloaded via the unloading valve before the reversing valve is switched to the working valve position, thereby oil blockage or pressure impact will not occur at the P port. Moreover, the opening speed of the unloading valve can be further limited by means of the reversing valve stem, so as to greatly reduce the instantaneous pressure impact of the high-pressure oil from the main pump on the T port.

Other features and advantages of the present application will be further detailed below in embodiments.

### BRIEF DESCRIPTION OF THE DRAWINGS

The accompanying drawings are provided herein to facilitate understanding on the present application, and constitute a part of the specification. They are used in conjunction with the following embodiments to explain the present application, but shall not be comprehended as constituting any limitation on the present application. In the figures:
Fig. 1 is a schematic structural view of the reversing valve stem of a reversing valve group according to a specific embodiment of the present application when the reversing valve stem is in a neutral position;
Fig. 2 is a schematic structural view of the reversing valve body in the reversing valve group shown in Fig. 1;
Fig. 3 is a schematic structural view of the reversing valve stem in the reversing valve group shown in Fig. 1;
Fig. 4 is a schematic structural view of the reversing valve stem of the reversing valve group according to the specific embodiment of the present application when the reversing valve stem is in a left position;
Fig. 5 is a schematic structural view of the reversing valve stem of the reversing valve group according to the specific embodiment of the present application when the reversing valve stem is in a right position; and
Fig. 6 is a schematic hydraulic diagram of the pumping hydraulic system according to a specific embodiment of the present application.

**Reference Numerals**

| | | | |
|---|---|---|---|
| 100 - | reversing valve; | 200 - | unloading valve |
| 300 - | overflow valve; | 1 - | reversing valve stem |
| 2 - | reversing valve body; | 3 - | reversing valve stem cavity |
| 11 - | diversion slot; | 12 - | position slot |
| 13 - | first flow passage inside the valve stem; valve stem | 14 - | second flow passage inside the |
| 21 - | first flow passage inside the valve wall; valve wall | 22 - | second flow passage inside the |
| P - | oil supply cavity; | L - | internal oil return flow passage |
| A - | second working oil cavity; | B - | first working oil cavity |
| T - | oil return cavity | | |

### DETAILED DESCRIPTION

Some embodiments of the present application will be detailed below with reference to the accompanying drawings. It may be understood that the embodiments described herein are only intended to describe and explain the present application rather than constitute any limitation on the present application.

The reversing valve group and the pumping hydraulic system according to the present application will be described below with reference to the accompanying drawings.

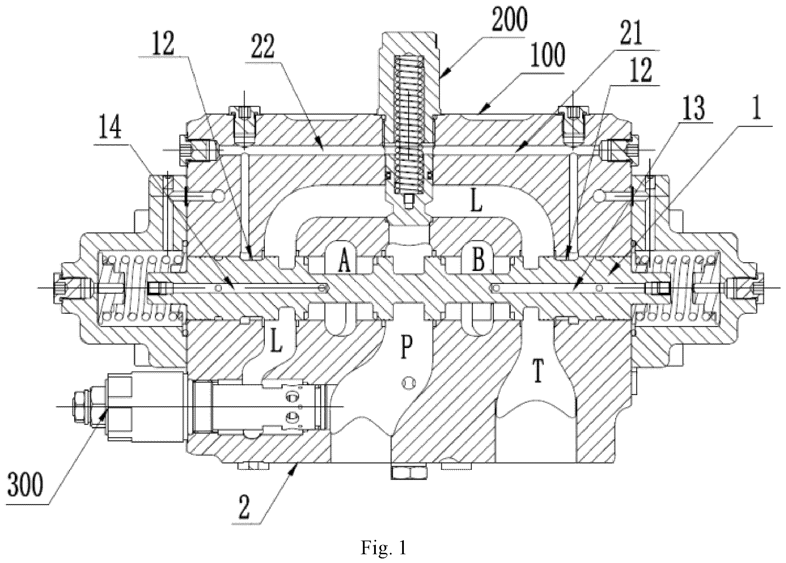

The present application discloses a novel reversing valve group. As shown in Figs. 1 to 3, in a specific embodiment, the reversing valve group comprises a reversing valve 100 and an unloading valve 200 that are arranged in an integrated form, wherein the reversing valve 100 is a slide valve and a reversing valve stem 1 is used for controlling the unloading valve 200 to switch to an unloading closed state at an end stroke position of the valve stem and to switch to an unloading open state at a midpoint stroke position of the valve stem.

The present application is intended to integrate the unloading valve 200 into the reversing valve 100, and utilize the stroke of the reversing valve stem 1 to control the opening or closing of the unloading valve 200 to avoid pressure impacts. When the reversing valve stem 1 is at the midpoint stroke position of the valve stem, the unloading valve 200 is controlled to be in an unloading open state, i.e., the oil in the hydraulic control cavity of the unloading valve 200 returns, and, at this point, the high-pressure oil at the P port will be unloaded at a high flow rate via the unloading valve 200. Before the reversing valve stem 1 moves to the working position (e.g., the end stroke position of the valve stem in this embodiment), the high-pressure oil at the P port can be at least partially unloaded via the unloading valve 200, and the high-pressure oil will not cause oil blockage and pressure impact at the P port. Alternatively, when the reversing valve stem 1 moves to a stroke position near the midpoint of the valve stem, the unloading valve 200 will be switched from the unloading closed state to an unloading open state, and the high-pressure oil at the P port will be unloaded via the unloading valve 200 instead of being suddenly released to the T port or the oil return passage; the pressure release from the hydraulic control cavity of the unloading valve 200 is gradual, and will not cause the high-pressure oil at the P port to be suddenly released to the T port or the oil return passage. Therefore, in the pumping reversing process, the instantaneous pressure impact of the high-pressure oil from the main pump on the T port can be greatly reduced by limiting the opening speed of the unloading valve by means of the reversing valve stem 1, and damage to the radiator and other failures can be avoided.

In comparison, for example, the high-flow slide valve used in China Patent Application No. CN210461217U has a M-type neutral function, and the P port is in communication with the T port via the valve stem in the neutral position, so as to realize neutral unloading; the reversing valve stem disconnects the P port from the T port, and pumping is performed normally. However, when the M-type neutral function of the valve stem is used for unloading, the high-pressure oil will be suddenly released to the oil return passage during the unloading, and the pressure impact on the oil return passage will be great, possibly causing damage to the radiator and other components. For example, in China Patent Application No. CN112096683A, the valve stem has an O-type neutral function, which doesn't support unloading. Therefore, an additional electromagnetic unloading valve is provided for unloading. However, at low-temperature times in winter, the reversing of the high-flow slide valve is slower. Often the high-flow slide valve is still in the O-type neutral function position after the electromagnetic unloading valve is closed, and, at this point, the P port is in a closed state, and a pressure impact is generated, leading to engine speed loss or stalling. In view of that problem, the closing delay time of the electromagnetic unloading valve during power-on may be increased to avoid the pressure impact from the oil pumping port of the main pump; however, the pumping efficiency will be decreased, and the reliability of the product will be decreased because of the additional electromagnetic unloading valve.

In order to realize the integration of the reversing valve with the unloading valve and avoid oil pressure impacts, as an example, the reversing valve 100 in this embodiment may comprise:
a reversing valve body 2, which is provided therein with a reversing valve stem cavity 3 arranged in an axial direction, and an oil supply cavity P, an oil return cavity T and a working oil cavity that extend to the reversing valve stem cavity 3; and
the reversing valve stem 1, which is arranged in the reversing valve stem cavity 3 in a sliding fit manner, and provided therein with a flow passage;
wherein the unloading valve 200 is mounted on the valve wall of the reversing valve body 2, and the hydraulic control cavity of the unloading valve 200 (i.e., the spring cavity of the unloading valve 200 shown in the figure) extends to the reversing valve stem cavity 3 through the flow passage inside the valve wall; at the end stroke position of the valve stem, the flow passage inside the valve wall is in communication with the flow passage of the valve stem and the oil supply cavity P; and, at the midpoint stroke position of the valve stem, the flow passage inside the valve wall can be in communication with the oil return cavity T.

Thus, it can be seen that the opening or closing of the unloading valve 200 can be controlled by means of the stroke of the reversing valve stem 1 by virtue of the arrangement of the flow passage inside the valve wall of the hydraulic control cavity of the unloading valve 200, the arrangement of the flow passage in the reversing valve stem 1 and the distribution of the flow passages in the reversing valve body 2, which is to say, the unloading valve 200 can be switched to the unloading closed state at the end stroke position of the valve stem, and can be switched to the unloading open state at the midpoint stroke position of the valve stem. Therefore, compared with the scheme that utilizes a separate electromagnetic valve for unloading, the electromagnetic valve for unloading can be omitted in this scheme, and the unloading valve can be controlled to open or close with the reversing valve stem.

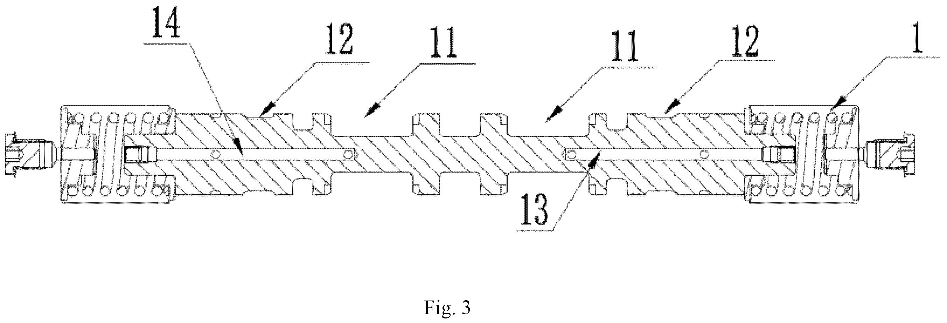

At the mid-point stroke position of the valve stem, in order to make the flow passage inside the valve wall communicate with the oil return cavity T, the reversing valve stem 1 shown in Fig. 3 may include a position slot 12, which is used to make the flow passage inside the valve wall communicate with the oil return cavity T at the mid-point stroke position of the valve stem, as shown in Fig. 1. In addition, the reversing valve stem 1 may further include a diversion slot 11, which is used to control the working oil cavity to selectively communicate with the oil supply cavity P or the oil return cavity T, as described in detail below.

As shown in Fig. 1, here, the reversing valve stem 1 is at the midpoint stroke position of the valve stem, and the oil in the hydraulic control cavity of the unloading valve 200 is in communication with the internal oil return flow passage L and the oil return cavity T through the flow passage inside the valve wall and the position slot 12; as the pressure in the hydraulic control cavity decreases gradually, the pressure oil at the port P will gradually open the valve port of the unloading valve 200, so that the oil supply cavity P communicates with the oil return cavity T, thus, the oil is directly unloaded and returns; in that way, the problem that the oil supply cavity P and the oil return cavity T communicate with each other suddenly at the midpoint stroke position of the valve stem and result in pressure impacts can be avoided. In other words, at the mid-point stroke position of the valve stem, it takes time to unload the spring cavity of the unloading valve; therefore, a delay time is required for the P port and the T port to start unloading, which is to say, there will be no pressure impact on the T port.

Since the pressure oil at the P port will be unloaded and returns by opening the unloading valve 200 at the mid-point stroke position of the valve stem, the reversing valve 100 itself may simply employ a three-position four-way valve with an O-type neutral function, which is conventional and has a simple structure and a low cost.

In this embodiment, in order to realize high-flow unloading and avoid pressure impacts, both the oil supply cavity P and the oil return cavity T employ a passage with a relatively large cross-section. Besides, since the flow passage inside the valve stem and the flow passage inside the valve wall are used for establishing or relieving the oil pressure in the hydraulic control cavity of the unloading valve 200, these passages have a relatively small cross section respectively so as to achieve a delay or damping function. For example, both the cross-sectional area of the flow passage inside the valve stem and the cross-sectional area of the flow passage inside the valve wall shall not be greater than 1/5 of the minimum cross-sectional area of the oil supply cavity P or the oil return cavity T.

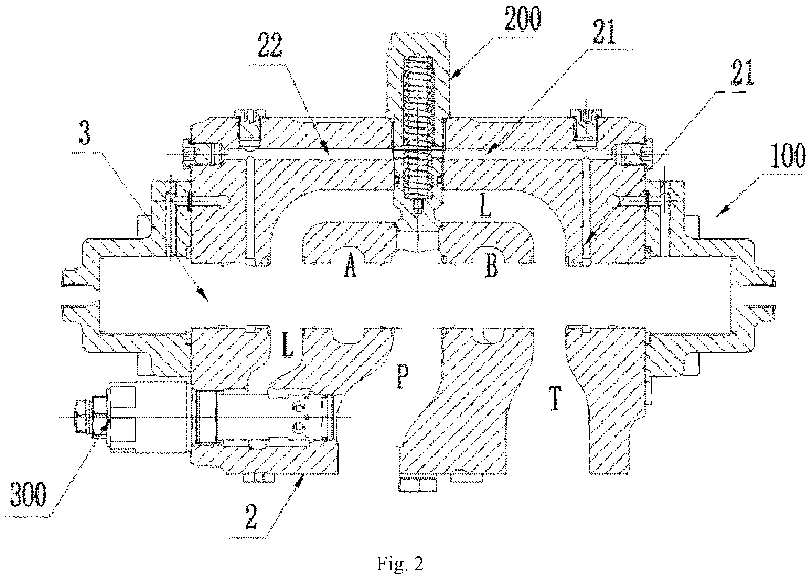

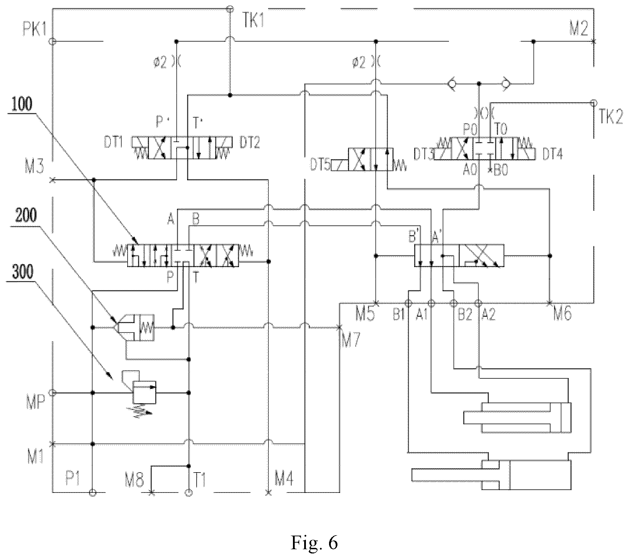

On the basis of realizing the above-mentioned reversing and unloading functions, in order to attain a purpose of simple arrangement of the oil passages and cavities, as shown in Fig. 2, on the reversing valve body 2, the unloading valve 200 is arranged at the center and distributed in the radial direction; the oil supply cavity P extends to the valve port end of the reversing valve body 2; the working oil cavity comprises a first working oil cavity B and a second working oil cavity A that are arranged at two axial sides of the oil supply cavity P; and the oil return cavity T is located at a first axial side of the oil supply cavity P and arranged at an outer side of the first working oil cavity B apart from the first operating oil cavity B in the axial direction; wherein the oil return cavity T is in communication with the valve port end of the reversing valve body 2 through an internal oil return flow passage L, and the internal oil return flow passage L extends to a second axial side of the oil supply cavity P and is arranged at an outer side of the second working oil cavity A apart from the second working oil cavity A in the axial direction. It can be seen that in the reversing valve 100, when the reversing valve stem 1 moves to the neutral position, the current position is the above-mentioned midpoint stroke position of the valve stem; and when the reversing valve stem 1 moves to the left or right end, the current position is the working valve position or the end stroke position of the valve stem. Of course, this is only an example. The reversing valve 100 shown in Figs. 1 to 3 is a three-position four-way electrohydraulic reversing valve, as shown in the schematic diagram in Fig. 6; however, obviously the reversing valve 100 can have more valve positions and oil ports.

Specifically, in the three-position four-way electrohydraulic reversing valve shown in Fig. 6, in order to realize the reversing function of the reversing valve 100 and the unloading function of the unloading valve 200 in combination, as shown in Fig. 3, the abovementioned flow passage inside the valve stem may comprise a first flow passage inside the valve stem 13 and a second flow passage inside the valve stem 14, which are arranged at two axial ends of the reversing valve stem 1; as shown in Fig. 2, the flow passage inside the valve wall may comprise a first flow passage inside the valve wall 21 and a second flow passage inside the valve wall 22, which extend from the hydraulic control cavity toward two sides in the axial direction; wherein, an axial outer end of the first flow passage inside the valve stem 13 is used for communicating with the first flow passage inside the valve wall 21, and an axial inner end of the first flow passage inside the valve stem 13 is used for communicating with the first working oil cavity B; and an axial outer end of the second flow passage inside the valve stem 14 is used for communicating with the second flow passage inside the valve wall 22, and an axial inner end of the second flow passage inside the valve stem 14 is used for communicating with the second working oil cavity A.

The left-right symmetrical design of the flow passage inside the valve stem and the flow passage inside the valve wall facilitates the hydraulic control cavity of the unloading valve 200 to be in communication with one of the first working oil cavity B and the second working oil cavity A that has higher oil pressure through the flow passage inside the valve wall and the flow passage inside the valve stem sequentially when the reversing valve stem 1 moves to a left-end stroke position of the valve stem or a right-end stroke position of the valve stem, so that the unloading valve 200 can be closed.

In order to facilitate processing, each of the first flow passage inside the valve stem 13, the second flow passage inside the valve stem 14, the first flow passage inside the valve wall 21 and the second flow passage inside the valve wall 22 comprises an axial flow passage and a radial flow passage. It may be noted that in the first flow passage inside the valve stem 13 and the second flow passage inside the valve stem 14 shown in Fig. 3, their respective radial flow passages are shown only in the form of circles owing to the angle of the section view.

In this embodiment, the reversing valve group as shown in Fig. 1 may further comprise an overflow valve 300, which is integrated on the valve wall of the reversing valve body 2, and has a valve port part arranged between the internal oil return flow passage L and the oil supply cavity P. After the overflow valve 300 is integrated, the reversing valve group has a higher integration level, a compact structure, and more comprehensive functions. The internal oil return flow passage L extends to a second axial side of the oil supply cavity P and is arranged at an outer side of the second working oil cavity A apart from the second working oil cavity A in the axial direction; thus, it not only facilitates the hydraulic control cavity of the unloading valve 200 to be in communication with the oil return cavity T through the position slot 12, but also facilitates the arrangement of the overflow valve 300.

In addition, in order to realize high-flow oil return, the unloading valve 200 is in the form of a cartridge valve. As shown in Fig. 6, with the cartridge valve, even when a reversing valve with an O-type neutral function is in the neutral position, the high-pressure oil at the port P can open the cartridge valve in the forward direction, thereby high-flow unloading is realized, without causing pressure accumulation or pressure impact on the oil supply cavity P of the reversing valve.

On that basis, the present application further discloses a pumping hydraulic system, which comprises a pumping oil cylinder group and the abovementioned reversing valve group, wherein the reversing valve 100 is used for controlling the pumping oil cylinder group. With the integrated and optimized design of the reversing valve group, the integration level is high, the cost is low, the use is smooth, the unloading in the reversing process is timely, and no pressure impact will occur.

Specifically, in the pumping reversing process, the reversing valve stem 1 is used to control the opening or closing of the unloading valve 200; thus, the pressure impact on the P port is avoided, and the instantaneous pressure impact of the high-pressure oil at the P port on the oil return cavity T is greatly reduced. As shown in Fig. 6, when the reversing valve 100 is in the neutral position, the spring cavity of the unloading valve 200 can be in communication with the oil return cavity T through the flow passage inside the valve wall and the position slot 12 from both ends, so that the unloading valve 200 is opened under the action of the pressure oil in the oil supply cavity P, and the pumping oil port of the main pump is unloaded.

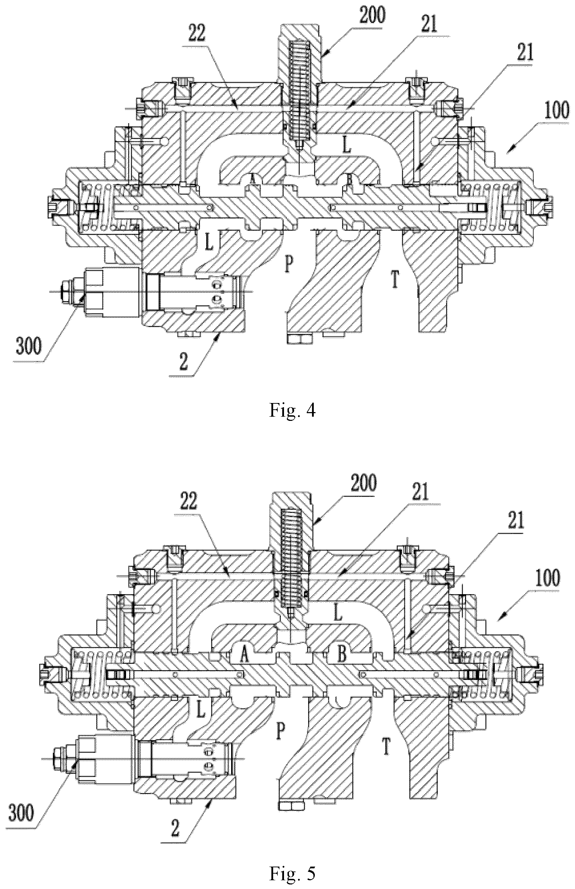

As shown in Fig. 4, in the process that the reversing valve stem 1 moves from the neutral position to the left end completely, as the reversing stroke of the valve stem increases, the position slot 12 at the left end can disconnect the communication between the second flow passage inside the valve wall 22 and the oil return cavity T, make the oil supply cavity P communicate with the first working oil cavity B, and make the second working oil cavity A communicate with the oil return cavity T; and the position slot 12 at the right end can disconnect the communication between the first flow passage inside the valve wall 21 and the oil return cavity T, and make the first flow passage inside the valve stem 13 communicate with the first working oil cavity B and the first flow passage inside the valve wall 21; thus, the unloading valve 200 is closed, and the pressure oil in the main pump enters the first working oil cavity B through the oil supply cavity P to drive the pumping oil cylinder group to act.

As shown in Fig. 5, in the process that the reversing valve stem 1 moves from the neutral position to the right end completely, as the reversing stroke of the valve stem increases, the position slot 12 at the right end can disconnect the communication between the first flow passage inside the valve wall 21 and the oil return cavity T, make the oil supply cavity P communicate with the second working oil cavity A, and make the first working oil cavity A communicate with the oil return cavity T; and the position slot 12 at the left end can disconnect the communication between the second flow passage inside the valve wall 22 and the oil return cavity T, and make the second flow passage inside the valve stem 14 communicate with the second working oil cavity A and the second flow passage inside the valve wall 22; thus, the unloading valve 200 is closed, and the pressure oil in the main pump enters the second working oil cavity A through the oil supply cavity P to drive the pumping oil cylinder group to act.

It can be seen that the electromagnetic unloading valve is cancelled in the pumping hydraulic system in the present application, and the opening or closing of the unloading valve 200 is controlled by means of the reversing valve stem 1, so as to avoid pressure impacts at the pumping oil port of the main pump during the pumping reversing process. In addition, damping may be arranged in the flow passage inside the valve stem of the reversing valve stem 1 to limit the opening speed of the unloading valve 200, so as to avoid the pressure oil at the pumping oil port of the main pump from impacting the oil return cavity T, which may result in extremely high instantaneous pressure in the oil return cavity T and damage to the radiator and other elements. In summary, the present application employs the reversing valve stem 1 to control the opening or closing of the unloading valve 200, so as to avoid pressure impacts brought by the pumping oil port of the main pump in the reversing process and avoid the engine speed loss or stalling. In the pumping reversing process, the instantaneous pressure impact of the high-pressure oil from the main pump on the T port can be greatly reduced by limiting the opening speed of the unloading valve 200 by means of the reversing valve stem 1, and damage to the radiator and other failures can be avoided.

As shown in Fig. 6, the present application further discloses a pumping hydraulic system, which comprises a pumping oil cylinder group and the abovementioned reversing valve group, wherein the reversing valve is used for controlling the pumping oil cylinder group. With the highly integrated pumping control valve group, only two basic valve groups are required between the pumping oil cylinder group and the oil pump or the main oil circuit of the system, and the control function is perfect, the control operation is smooth, and the cost is low.

In the description of the present application, it may be understood that the terms "first" and "second" are used only for a descriptive purpose, but shall not be interpreted as indicating or implying relative importance or implicitly indicating the quantity of the indicated technical features. Hence, a feature defined by "first" or "second" may explicitly or implicitly comprise at least one such feature. In the description of the present application, "a plurality of' means at least two, such as two or more, etc., unless otherwise specified explicitly.

In the present application, unless otherwise specified and defined explicitly, the terms "install", "connect", "fix", etc. shall be interpreted in their general meanings. For example, the connection may be a fixed connection, a detachable connection, or an integral connection; may be a mechanical connection or an electrical connection or in communication with each other; may be a direct connection or an indirect connection via an intermediate medium, or internal communication or interactive relation between two elements. Those having ordinary skills in the prior art can understand the specific meanings of the terms in the present application in their context.

In the description of the present disclosure, the expressions of reference terms such as "an embodiment", "some embodiments", "an example", "a specific example", or "some examples" mean that the specific features, structures, materials or characteristics described in those embodiments or examples are included in at least one embodiment or example of the present application. In this specification, the exemplary expressions of the above terms may not necessarily refer to the same embodiment or example. Moreover, the specific features, structures, materials, or characteristics described can be combined appropriately in any one or more embodiments or examples. Furthermore, those skilled in the art may combine or assemble different embodiments or examples and features in different embodiments or examples described herein, provided that there is no conflict among them.

While some embodiments of the present application are illustrated and described above, it may be understood that those embodiments are exemplary only and shall not be deemed as constituting any limitation on the present application. Those having ordinary skills in the art can make variations, modifications, and replacements to the embodiments within the scope of the present application.

## Claims

1. A reversing valve group, comprising a reversing valve (100) and an unloading valve (200) that are arranged in an integrated form, wherein the reversing valve (100) is a slide valve and a reversing valve stem (1) is used for controlling the unloading valve (200) to switch to an unloading closed state at an end stroke position of the valve stem and to switch to an unloading open state at a midpoint stroke position of the valve stem.

2. The reversing valve group of claim 1, wherein the reversing valve (100) comprises:
a reversing valve body (2), which is provided therein with a reversing valve stem cavity (3) arranged in an axial direction, and an oil supply cavity (P), an oil return cavity (T) and a working oil cavity that extend to the reversing valve stem cavity (3); and
the reversing valve stem (1), which is arranged in the reversing valve stem cavity (3) in a sliding fit manner, and provided therein with a flow passage;
wherein the unloading valve (200) is mounted on a valve wall of the reversing valve body (2), and a hydraulic control cavity of the unloading valve (200) extends to the reversing valve stem cavity (3) through a flow passage inside the valve wall;
at the end stroke position of the valve stem, the flow passage inside the valve wall is in communication with the flow passage inside the valve stem and the oil supply cavity (P); and at the midpoint stroke position of the valve stem, the flow passage inside the valve wall can be in communication with the oil return cavity (T).

3. The reversing valve group of claim 2, wherein the reversing valve stem (1) comprises:
a diversion slot (11) for controlling the working oil cavity to be selectively in communication with the oil supply cavity (P) or the oil return cavity (T); and
a position slot (12) for controlling the flow passage inside the valve wall to be in communication with the oil return cavity (T) at the midpoint stroke position of the valve stem.

4. The reversing valve group of claim 2, wherein the reversing valve (100) is a three-position four-way valve with an O-type neutral function.

5. The reversing valve group of claim 2, wherein both the cross-sectional area of the flow passage inside the valve stem and the cross-sectional area of the flow passage inside the valve wall are not greater than 1/5 of the minimum cross-sectional area of the oil supply cavity (P) or the oil return cavity (T).

6. The reversing valve group of any of claims 2 to 5, wherein on the reversing valve body (2), the unloading valve (200) is arranged at the center and distributed in the radial direction, the oil supply cavity (P) extends to a valve port end of the reversing valve body (2), the working oil cavity comprises a first working oil cavity (B) and a second working oil cavity (A) that are arranged at two axial sides of the oil supply cavity (P), and the oil return cavity (A) is located at a first axial side of the oil supply cavity (P) and arranged at an outer side of the first working oil cavity (B) apart from the working oil cavity (B) in the axial direction; and wherein the oil return cavity (T) is in communication with the valve port end of the reversing valve body (2) through an internal oil return flow passage (L), and the internal oil return flow passage (L) extends to a second axial side of the oil supply cavity (P) and is arranged at an outer side of the second working oil cavity (A) apart from the second working oil cavity (A) in the axial direction.

7. The reversing valve group of claim 6, wherein the flow passage inside the valve stem comprises a first flow passage inside the valve stem (13) and a second flow passage inside the valve stem (14), which are arranged at two axial ends of the reversing valve stem (1); the flow passage inside the valve wall comprises a first flow passage inside the valve wall (21) and a second flow passage inside the valve wall (22), which extend from the hydraulic control cavity toward two sides in the axial direction;
wherein, an axial outer end of the first flow passage inside the valve stem (13) is used for communicating with the first flow passage inside the valve wall (21), and an axial inner end of the first flow passage inside the valve stem (13) is used for communicating with the first working oil cavity (B); and an axial outer end of the second flow passage inside the valve stem (14) is used for communicating with the second flow passage inside the valve wall (22), and an axial inner end of the second flow passage inside the valve stem (14) is used for communicating with the second working oil cavity (A).

8. The reversing valve group of claim 6, wherein the reversing valve group comprising:
an overflow valve (300), which is integrated on the valve wall of the reversing valve body (2) and has a valve port part arranged between the internal oil return flow passage (L) and the oil supply cavity (P).

9. The reversing valve group of claim 1, wherein the unloading valve (200) is a cartridge valve.

10. A pumping hydraulic system comprising a pumping oil cylinder group, **characterized in that** the pumping hydraulic system further comprises the reversing valve group of any of claims 1 to 9, and the reversing valve (100) is used for controlling the pumping oil cylinder group.
